# EUROPÄISCHE PATENTSCHRIFT

(11) **EP 3 242 854 B1**
(45) Veröffentlichungstag und Bekanntmachung des Hinweises auf die Patenterteilung: **26.03.2025**
(21) Anmeldenummer: 16700251.8
(22) Anmeldetag: 07.01.2016
(51) Int. Cl.: C01B 35/12, C09D 5/14, B27K 3/16, B27K 3/00, B27K 3/18, B27K 3/34, B27K 3/52, C09D 7/40

(54) **BORAT HERGESTELLT DURCH NASSMAHLEN UND DESSEN VERWENDUNG**
BORATE PRODUCED BY WET MILLING AND ITS USE
BORATE PRODUIT PAR BROYAGE HUMIDE ET SON UTILISATION

(30) Priorität: 08.01.2015 EP 15150521
(43) Veröffentlichungstag der Anmeldung: 15.11.2017
(73) Patentinhaber: Zimmermann, Werner, 68309 Mannheim (DE)
(72) Erfinder: ZIMMERMANN, Werner, D-68309 Mannheim (DE); TRIEM, Albert, D-68309 Mannheim (DE); JODLAUK, Joerg, D-68309 Mannheim (DE)
(74) Vertreter: Wesch, Arno
(86) Internationale Anmeldenummer: PCT/EP2016/050239
(87) Internationale Veröffentlichungsnummer: WO 2016/110554

(56) Entgegenhaltungen:
- EP-A1- 0 434 391
- WO-A1-2013/184943
- CN-A- 101 186 308
- CN-A- 102 633 277
- US-A- 5 858 079
- US-A1- 2003 230 740

## Beschreibung

Die vorliegende Erfindung betrifft pulverförmig vorliegendes Kationborat mit einer geringen Korngröße, einer geringen Wasserlöslichkeit und einem hohen Gehalt an Erdalkaliborat, nämlich Calciumborat. Ferner betrifft die Erfindung ein Verfahren zur Herstellung des Pulvers, eine Suspension, die dieses Pulver umfasst, die Verwendung des Pulvers oder der Suspension für die fungizide Ausrüstung (insbesondere von Holzschutzmitteln) sowie ein entsprechendes fungizid ausgerüstetes Holzschutzmittel.

Beschichtungsstoffe haben die Aufgabe, das zu behandelnde Substrat vor verschiedenen Umwelteinflüssen zu schützen, die Umgebung in Abhängigkeit vom ästhetischen Empfinden zu gestalten und zu verschönern sowie notwendigen technischen Eigenschaften Rechnung zu tragen.

Besonders im Bereich des Holzschutzes sind Verbindungen wie 3-Iod-2-propinylbutylcarbamat oder Triazole wie Propiconazol oder Tebuconazol bekannt. Ferner werden anorganische Verbindungen wie Kupfer-, Silber- oder Chromsalze eingesetzt.

Es ist außerdem seit Jahrzehnten bekannt, das Borsäure und Borax (Dinatriumtetraborat-Hydrat) einzeln und in Abmischungen in Holzbeschichtungen gegen verschiedenartige Pilze wirksam sind. Auf Grund der Wasserlöslichkeit werden diese Chemikalien jedoch als stark gefährlich und gesundheitsgefährdend eingestuft. Besonders die hohe Wasserlöslichkeit und damit das extreme Auswaschungsverhalten dieser Borverbindungen und die Emission in die Umwelt sind sehr umstritten und werden als kritisch gesehen. Die Wasserlöslichkeit führt zu einer Kennzeichnungspflicht der Formulierungen, sodass deren Einsatz vermutlich in den nächsten Jahren gemäß REACH verboten werden wird. Wasserlösliche Borate sind somit keine gängige Alternative mehr.

Die US 5,224,315 beschreibt ein Baumaterial. Das Material ist im Kern aus einer Mehrzahl von Schichten von Kunststoffschaummaterial zusammengesetzt. Der Kern enthält 1 bis 20 Gew.% verkapselte Boratverbindungen. Eine beispielhafte Boratverbindung ist TIM-BOR^{®} der US Borax Corporation (Dinatriumoctaborat-Tetrahydrat). Eine derartige Verkapselung, um die Wasserlöslichkeit zu beschränken, ist jedoch aufwändig.

Gemäß dem Abstract der CN 103589286 A wird dort eine Grundierfarbe beschrieben, die 2 bis 3 Gewichtsteile Zinkborat in einer Epoxidharzbasis offenbart. Die Grundierfarbe hat auch eine Isolierwirkung.

Darüber hinaus gibt es wasserunlösliche Borate. Hierzu zählt unter anderem auch Calciumborat.

Die US 2002/0182431 A1 beschreibt ein Verfahren zur Herstellung von mit Borat behandeltem Holzwerkstoff. In der Patentschrift wird die Fungizidie von Boraten diskutiert, wobei Calciumborat als wegen seiner geringen Löslichkeit vorteilhaft bezeichnet wird. Auf eine Korngröße, wie sie sich gemäß der vorliegenden Erfindung als wesentlich herausgestellt hat, wird in der US 2002/0182431 nicht eingegangen.

Gemäß der WO 01/87559 A2 eignet sich Calciumborat als Pestizid für Verbundstoffe auf Basis von Lignocellulose. Beschrieben wird dort, dass es auf die Teilchengröße des Calciumborats nicht ankommt. In der WO 01/87559 A2 wird eine mittlere Teilchengröße von 1 bis 500 µm empfohlen, vorzugsweise 10 bis 150 µm.

Gemäß dem Abstract der JPS6426401 A wird dort ein Mittel für die flammhemmende Ausrüstung von Holz beschrieben. Dazu wird eine anorganische Verbindung als feines Pulver in einem hydrophoben organischen Lösungsmittel hergestellt und damit das Holz imprägniert. Eine beispielhafte wasserunlösliche und flammenhemmende anorganische Verbindung ist Calciumborat, wobei die anorganische Verbindung mit einem Durchmesser von weniger als 0,1 µm eingesetzt werden soll. Alternative anorganische Verbindungen sind Siliciumdioxid, Aluminiumoxid, Antimonoxid, Calciumcarbonat, Calciumphosphat und Bariumphosphat. Der Brandschutz wird erreicht, wobei die anorganischen Verbindungen bei hohen Temperaturen zur Glasbildung neigen. Aus der CN 101 186 308 A und der CN 102 633 277 A sind Herstellungsverfahren für Zinkborat einer geringen Teilchengröße bekannt. Das Zinkborat wird u.a. als Flammschutzmittel verwendet. Die Offenlegungsschrift US2003/230740 A1 offenbart ein Verfahren zur Herstellung einer Zusammensetzung enthaltend Europium, Yttrium und Gadoliniumborat. Ein derartiges Borat auf Basis von Metallen der seltenen Erden eignet sich u.a. als Leuchtstoff. Aus der US 5 858 079 A ist eine beschichtete, pulverförmige Strontiumborat-Pigment-Zusammensetzung mit geringer Teilchengröße bekannt, welche auch für antibakterielle und antimykotische Ausrüstungen geeignet ist. Die WO 2013/184943 A1 beschreibt eine bioaktive Zusammensetzung aus Calciumborat und Siliciumdioxid, wobei letzteres das Calciumborat beschichtet. Eine solche Zusammensetzung dient u. a. zur Behandlung von Knochendefekten.

Der vorliegenden Erfindung hat insbesondere die Aufgabe zu Grunde gelegen, Substrate und Beschichtungen in ihrem natürlichen Zerfall zu hemmen. Es sollte ein Tränkungsmittel mit einer multifunktionellen Eigenschaft für natürliche und künstlich hergestellte poröse Substrate, wie Holz, Papier, Beton, Naturstein oder andere Untergründe, die wässrige Medien aufnehmen können, bereitgestellt werden. Die wesentlichen Eigenschaften umfassen die folgenden Aspekte:
1. Erstellung einer Feuchtebarriere
2. UV-Schutz
3. Flammhemmende Wirkung
4. Wachstumshemmende Wirkung auf holzzerstörende und holzverfärbende Pilze, Bakterien und Tiere
5. Hemmende Wirkung auf oberflächenverfärbende Holzinhaltsstoffe

Diese Aufgabe wird gemäß der vorliegenden Erfindung gelöst durch ein pulverförmig vorliegendes Kationborat nach Anspruch 1, mit
a. einer Wasserlöslichkeit von höchstens 5g/l bei 20°C, angegeben als freies Bor, und
b. einer Korngröße d90, bestimmt gemäß ISO 20998- 1:2006, von weniger als 500 nm, wobei das Pulver Haftvermittler ausgewählt aus der Gruppe der Titanate, Aluminate, Zirkonate, Silane und Mischungen davon enthält und wobei das Pulver mindestens 50 Gew.-% Calciumborat umfasst, bezogen auf die Gesamtmenge Kationborat und angegeben als Ca3(B03)2.

Erfindungsgemäß wird die Wasserlöslichkeit vorzugsweise durch konduktometrische Titration bestimmt, zum Beispiel nach Kohlrausch oder durch potentiometrische Direkttitration.

Es hat sich nach Beimpfung mit Holz zerstörenden Pilzen, Bakterien und Tieren, wie Aureobasidium pullulans, Sclerophoma pithyopila und Aspergillus niger gezeigt, dass das erfindungsgemäße Pulver als Suspension durch die sehr geringe Korngröße tief in das Holz eindringen kann und gegenüber handelsüblichen Holzschutzmitteln ein signifikant breiteres unbefallenes Areal zeigt. Materialien mit einer durchschnittlichen Partikelgröße von 20 nm und größer finden sich bevorzugt in den Zellzwischenräumen (Lumen) wieder. Kleinere Partikel können sogar in die Zellen und Zellwände eindringen und somit die Wirksamkeit durch die erhöhte Konzentration wesentlich verbessern. Die erfindungsgemäße Zusammensetzung über ein kolloidal verteiltes unlösliches Borat in Kombination mit Haftvermittlern verbindet gute multifunktionelle Eigenschaften mit einer kennzeichnungsfreien oder -armen Beschreibung und Auslobung in Sicherheitsdatenblättern.

Erfindungsgemäß behandeltes Holz ist hydrophob ausgerüstet. Dadurch wird gewährleistet, dass Feuchtigkeit nicht eindringen kann, jedoch eine gute Dampfdiffusion gewährleistet bleibt. Diese Feuchtebarriere gewährleistet sowohl die hemmende Wirkung gegen verfärbende Holzinhaltsstoffe als auch ein gegen Holz zerstörende bzw. verfärbende Pilze, Bakterien und Tiere hemmendes Substratmilieu. Dies wirkt einer Holzschrumpfung entgegen und hat somit das Holz verfestigende Eigenschaften. Durch die chemisch sehr inerten Eigenschaften werden das Substrat schädigende UV-Strahlen in ihrer Wirksamkeit gehemmt. Gemäß der vorliegenden Erfindung werden das Holz zerstörende Pilze und Bakterien in ihrem Wachstum gehemmt bzw. ihre Entwicklung verhindert, während die Mittel gleichzeitig für Menschen, Haustiere und Umwelt ungiftig sind. In großer Hitze baut sich ein Glasfilm auf, welcher das Substrat bis zu einem gewissen Grade gegen Entzündbarkeit schützen kann.

### Detaillierte Beschreibung der Erfindung

In einem ersten Aspekt betrifft die Erfindung ein pulverförmig vorliegendes Kationborat mit a. einer Wasserlöslichkeit von höchstens 5 g/l bei 20 °C angegeben als freies Bor, und b. einer Korngröße d90, bestimmt gemäß ISO 20998-1: 2006, von weniger als 500 nm, wobei das Pulver Haftvermittler ausgewählt aus der Gruppe bestehend aus Titanaten, Aluminaten, Zirkonaten, Silanen und Mischungen davon enthält und wobei das Pulver mindestens 50 Gew.-% Calciumborat umfasst, bezogen auf die Gesamtmenge Kationborat und angegeben als Ca₃(B0₃)₂.

Vorzugsweise beträgt die Korngröße d90 des erfindungsgemäßen pulverförmig vorliegenden Kationborats weniger als 450 nm und vorzugsweise weniger als 400 nm, insbesondere weniger als 350 nm, beispielsweise weniger als 300 nm, wie weniger als 250 nm, vorzugsweise weniger als 200 nm, insbesondere weniger als 200 nm, wie weniger als 150 nm oder weniger als 100 nm, jeweils bestimmt gemäß ISO 20998-1:2006.

Darüber hinaus ist bevorzugt, dass die Wasserlöslichkeit mindestens 0,1 g/l Wasser beträgt bei 20 °C bezogen auf freies Bor .

Neben dem Calciumborat kann das pulverförmig vorliegende Kationborat noch weitere Kationborate enthalten, wobei das Kation ausgewählt ist aus der Gruppe bestehend aus Magnesium, Strontium, Barium, Lithium, Aluminium, Titan, Silicium, Zink, Mangan, Zirkon, Silicium, Ammonium und Mischungen davon.

Bevorzugt ist als Kation des erfindungsgemäßen pulverförmig vorliegenden Kationborats neben dem stets vorhandenen Calcium noch ein oder mehrere von Calcium verschiedene Erdalkaliborat (e), vorzugsweise Barium. Bevorzugt ist ein Pulver, das insgesamt mindestens 51 Gew.-% Calcium- und Bariumborat umfasst, bevorzugter mindestens 62 Gew.-%, insbesondere mindestens 70 Gew.-%, wie mindestens 75 Gew.-%.

Das erfindungsgemäße Pulver ist dadurch gekennzeichnet, dass es mindestens 50 Gew.-% Calciumborat umfasst, vorzugsweise mindestens 60 Gew.-% Calciumborat, bevorzugter mindestens 65 Gew.-% Calciumborat, insbesondere mindestens 70 Gew.-% Calciumborat, wie mindestens 75 Gew.-% Calciumborat, bezogen auf die Gesamtmasse Borat und angegeben als Ca₃(B0₃)₂.

Bevorzugte Typen von Calciumborat sind synthetischen oder natürlichen Ursprungs, wobei das Calciumborat vorzugsweise ausgewählt ist aus Colemanit (CaB₃0₄ (OH)₃ · 3 H₂0) , Jarandolit (CaB₃0₄ (OH) ₃) und Hydroboracit (CaMgBₑ0₈ (OH) ₆ · 3 H₂0) und Ulexit (Na_{0,3}Ca_{0,7}B₃0₄ (OH)₃ · H₂0).

Darüber hinaus sind Pulver bevorzugt, die 1 bis 20 Gew.-% Bariumborat umfassen, vorzugsweise 2 bis 15 Gew.-% Bariumborat, insbesondere 5 bis 12 Gew.-% Bariumborat, bezogen auf die Gesamtmasse Borat und angegeben als Ba₃(B0₃)₂.

Zudem ist ein Pulver bevorzugt, das 1 bis 20 Gew.-% Zirkoniumborat umfasst, vorzugsweise 2 bis 15 Gew.-% Zirkoniumborat, insbesondere 5 bis 12 Gew.-% Zirkoniumborat, bezogen auf die Gesamtmasse Borat und angegeben als Zr₃(B0₃)₄.

Das erfindungsgemäße pulverförmig vorliegende Kationborat enthält Haftvermittler. Der Haftvermittler ist ausgewählt aus der Gruppe der Titanate, Aluminate, Zirkonate, Silane und Mischungen davon, d.h. das Pulver enthält einen oder mehrere Haftvermittler ausgewählt aus der Gruppe der Titanate, Aluminate, Zirkonate und Silane.

Vorzugsweise ist das pulverförmig vorliegende Kationborat mit dem Haftvermittler beschichtet.

Bei der Herstellung des erfindungsgemäßen pulverförmig vorliegenden Kationborats wird üblicherweise so vorgegangen, dass beispielsweise Silan zugesetzt wird. Wenn der (alternative oder zusätzliche) Haftvermittler Titanat, Aluminat oder Zirkonat ist, dann wird der Haftvermittler typischerweise so eingebracht (und das Pulver aus Kationborat vorzugsweise damit beschichtet), indem Precursor-Verbindungen für Titanat, Aluminat oder Zirkonat eingesetzt werden.

Beispielhafte Precursor-Verbindungen für erfindungsgemäß eingesetzte Haftvermittler sind:
- Titanoxychlorid (TiOCl₂),
- Titantetrachlorid (TiCl₄),
- Lithiumaluminat (LiAl(OH)₄),
- Zirkonoxychlorid (ZrOCl₂),
- 2,2-(Bis-2-propenolatomethyl)butanolato-tris(neodecano-lato-O)-Zirconium(IV),
- 2,2-(Bis-2-propenolatomethyl)butanolato-tris((dodecyl)-benzolsulfonato-O)-Zirconium(IV),
- 2,2-(Bis-2-propenolatomethyl)butanolato-tris((dioctyl)-phosphato-O)-Zirconium(IV) und
- 2,2-(Bis-2-propenolatomethyl)butanolato-tris-(2-methyl-2-propenoato-O)-Zirconium(IV).

In allen Ausführungsformen der Erfindung ist bevorzugt, dass als Haftvermittler Silan eingesetzt wird, wobei das Silan vorzugsweise ein Aminosilan ist.

Eine typische Menge des einen oder der mehreren Haftvermittler (ausgewählt aus der Gruppe bestehend aus Titanaten, Aluminaten, Zirkonaten, Silanen und Mischungen davon) in dem pulverförmig vorliegenden Kationborat (erfindungsgemäßen Pulver) ist 0,05-30 Gewichtsprozent an Trockenfestkörper, vorzugsweise 0,5-12 Gewichtsprozent Trockenfestkörper, bezogen auf die Masse des einzusetzenden Kationborats.

Die Herstellung der erfindungsgemäßen Pulver erfolgt nach dem Stand der Technik durch Vermahlung, Pulversynthese oder durch Verfahren wie physikalische oder chemische Gasphasenabscheidung (PVD oder CVD). Dabei können die Oberflächenspannung senkende Substanzen eingesetzt werden, wie aus dem Bereich der Tenside, Öle, Emulgatoren oder Fluorpolymere.

Das erfindungsgemäße Pulver kann also zusätzlich zu Kationborat und Haftvermittler (ausgewählt aus der Gruppe bestehend aus Titanaten, Aluminaten, Zirkonaten, Silanen und Mischungen davon) weitere Bestandteile enthalten, auch weitere Haftvermittler.

In einem zweiten Aspekt betrifft die Erfindung ein Verfahren zur Herstellung des erfindungsgemäßen pulverförmig vorliegenden Kationborats, bei dem:
a) Kationborat in Anwesenheit des Haftvermittlers vermahlen wird und
b) das Mahlprodukt Trocknen (vorzugsweise Sprüh- oder einem Gefriertrocknen) unterworfen wird,
um das pulverförmig vorliegende Kationborat zu erhalten.

In einem dritten Aspekt betrifft die Erfindung eine Suspension, die umfasst:
a. Suspensionsmittel und
b. das erfindungsgemäße pulverförmig vorliegende Kationborat.

Dabei ist bevorzugt, dass die Suspension als Suspensionsmittel ein oder mehrere Lösemittel ausgewählt aus Wasser, Glykolen und Kohlenwasserstoffen umfasst,
wobei das Suspensionsmittel vorzugsweise ein oder mehrere Lösemittel ausgewählt aus Wasser, Naphta und Ethylenglykol umfasst. Insbesondere bevorzugt ist das Suspensionsmittel der erfindungsgemäßen Suspension ausgewählt aus Wasser, Ethylenglykol und Mischungen derselben.

In einem vierten Aspekt betrifft die Erfindung die Verwendung des erfindungsgemäßen pulverförmig vorliegenden Kationborats oder der erfindungsgemäßen Suspension für die fungizide, biozide und insektizide Ausrüstung von organischen oder anorganischen Bindemitteln, Lackhalberzeugnissen und Beschichtungsstoffen
vorzugsweise von lignosehaltigen synthetischen oder natürlichen Materialien, Leimen, Klebern, Kunststoffen, Polymerkompositen, Kohlenstoff-basierten Bauteilen, Beton, Betonersatzstoffen, Teer- und Asphaltmischungen, anorganischen oder hybridbasierenden Beschichtungsstoffen, Textilien, Glas, Keramik, Glaskeramik, Metallen oder Metall- oder Salzschmelzen.
insbesondere zur fungiziden Ausrüstung von Holzschutzmitteln.

In einer weiteren Ausführungsform des vierten Aspekts betrifft die Erfindung die Verwendung des erfindungsgemäßen pulverförmig vorliegenden Kationborats oder der erfindungsgemäßen Suspension für die licht- und wetterbeständige Ausrüstung von organischen oder anorganischen Bindemitteln, Lackhalberzeugnissen und Beschichtungsstoffen,
vorzugsweise zum UV-Schutz derselben,
insbesondere zur UV-Schutz-Ausrüstung von Holzschutzmitteln.

Bei der erfindungsgemäßen Verwendung ist bevorzugt, dass bei der Tränkung von Holz das Holz verfärbende Inhaltsstoffe (wie beispielsweise langkettige Zucker, Tannin oder Abbauprodukten von Lignin) ganz oder teilweise gebunden und ein Durchschlagen in die nachfolgenden Beschichtungen verhindert oder zeitlich verzögert wird.

Dabei ist es erfindungsgemäß bevorzugt, dass die Menge Kationborat 0,01 bis 25 Gew.-% beträgt, bezogen auf das Gewicht des ausgerüsteten Produkts, vorzugsweise 0,1 bis 10 Gew.-%.

In einer weiteren Ausführungsform betrifft der vierte Aspekt der Erfindung die Verwendung des erfindungsgemäßen pulverförmig vorliegenden Kationborats oder der erfindungsgemäßen Suspension in einem Pflanzenschutzmittel, Dünger, Katalysator zur Veränderung von NOX in der Luft, CO-Absorber, Neutronenabsorber, Schmiermittel in Ölen, Spezialglas oder einem Brandschutzmittel.

Die Suspension aus dem hergestellten Material kann als Konzentrat oder als gebrauchsfertige Lösung zu einer Imprägnierlösung zum Schutz von Holz und anderen Untergründen, die wässrige Medien aufnehmen, verarbeitet werden. Die Anwendung erfolgt durch handwerkliche Verfahren wie Streichen, Tauchen, Spritzen oder durch großtechnische Verfahren wie Druckimprägnierung.

Die Suspension kann als werkstoffspezifischer Verfestiger dienen und eine Barriere gegen Feuchte aufbauen.

Die Konzentrate oder Gebrauchslösungen können je nach Lösemittelbasis der Suspension in wasserlöslichen oder in aliphatischen Kohlenstoffen löslichen Pigmentpräparationen eingefärbt werden. Eine Zugabe von Wachs-, Silikon- und/oder Acrylatdispersionen zur Erzielung einer wasserabweisenden Wirkung oder Verbesserung der Fixierung ist ebenfalls möglich.

Die Suspension kann als Konzentrat
- in bindemittelhaltige wasserbasierte sowie in lösemittelbasierte Systeme (Imprägnierungen, Grundierungen, Lasuren) eingearbeitet werden oder
- in wasserbasierte sowie in lösemittebasierte Leimpräparationen eingearbeitet werden.

Die Suspension kann als Holzschutzmittel, nach Verträglichkeitsprüfung, bestehenden Imprägnierungen und Lasuren für Holz und Papier zugesetzt werden kann. Die wirksamen Konzentrationen liegen bei 1 - 25 Gew.-%, je nach Holz- und Papierart und Zustand des Holzes. Unter *"Holz"* sind sowohl massives Holz als auch Holzwerkstoffe wie Spanplatten, Sperrholz zu verstehen; hier kann gegebenenfalls das Holzschutzmittel auch im Leimuntermischverfahren eingebracht werden.

Bei der Verwendung von organischen Bindemitteln bzw. Dispersionspolymeren kommen handelsübliche Reinstoffe oder Hybride aus dem Bereich der Acrylate, Polyurethane, Polyvinylacetate, Epoxide, Fluorpolymeren, Öle, Casein, Zellulose, Leime sowie soja- und leinölbasierte Alkydharze einerseits zum Einsatz, andererseits werden aus dem Bereich der anorganischen Bindemittel Stoffe wie Wassergläser, Zement, Aluminate, gebrannter Kalk, Anhydrit, Ettringit, Polyphosphate, Phosphazene, Metalloxid-Sole und Salzmischungen verwendet. Die Einsatzmenge kann zwischen 0,1 - 85 Gew.-% betragen, vorzugsweise aber im Bereich von 1 - 45 Gew.-%.

Die Suspension kann als Holzschutzmittel gemeinsam mit anderen handelsüblichen Chemikalien, welche als Holzschutzmittel Verwendung finden, zur Wirksamkeitssteigerung gemischt werden, insofern eine Verträglichkeitsprüfung dies zulässt. Dies sind als Beispiel:
- 3-Iod-2-propinylbutylcarbamat,
- (+)-1-[2-(2,4-Dichlorphenyl)-4-propyl-1,3-dioxolan-2-yl-methyl]-1H-1,2,4-triazol oder
- m-Phenoxybenzyl-3-(2,2-dichlorvinyl)-2,2-dimethylcyclo-propancarboxylat.

Die Suspension kann die Mischung der Werkstoffe hinsichtlich einer UV-Stabilität unterstützen und einem Schrumpfen oder Quellen von lignocellulosischen Werkstoffen entgegenwirken.

Die Suspension kann mit weiteren beliebigen Füllstoffen und/oder Pigmenten organischer und/oder anorganischer Natur versetzt werden.

In einem fünften Aspekt betrifft die Erfindung ein Holzschutzmittel, welches das erfindungsgemäße pulverförmig vorliegende Pulver oder die erfindungsgemäße Suspension umfasst, wobei die vorhandene Menge Kationborat in dem Holzschutzmittel 0,05 bis 25 Gew.-% beträgt, vorzugsweise 0,1 bis 5 Gew.-%, bezogen auf das Gewicht des Holzschutzmittels.

Erfindungsgemäß ausgerüstete Holzschutzmittel können darüber hinaus handelsübliche UV-Schutzmittel enthalten. Bevorzugte UV-Schutzmittel sind Tinuvin 292, Tinuvin 171, Tinuvin 5333 und Tinuvin 1130.

Das erfindungsgemäß ausgerüstete Holzschutzmittel stellt vorzugsweise eine feuchte Barriere dar und wirkt somit einem Quellen entgegen. Ferner wirkt das erfindungsgemäß ausgerüstete Holzschutzmittel vorzugsweise als Stützkorn in den Poren des Holzes und wirkt einem Schrumpfen entgegen.

Die Vorteile der vorliegenden Erfindung ergeben sich insbesondere aus den nachfolgenden Beispielen. Prozentangaben beziehen sich - wenn nicht anders angegeben - auf das Gewicht.

### Beispiele

Nachfolgend sind die erfindungsgemäße Herstellung eines erfindungsgemäßen Pulvers und einer erfindungsgemäßen Suspension beschrieben.

Verwendete Materialien:
- Peptapon 52 (nichtschäumender Suspensionsstabilisator, Zschimmer & Schwarz GmbH & Co. KG, Lahnstein, Deutschland),
- Dolapix G65 (Phosphonatzubereitung, Zschimmer & Schwarz, Lahnstein, Deutschland),
- Tego Dispers 651 (Pigment-Netz- und Dispergieradditiv, Evonik Industries AG, Essen, Deutschland),
- Texanol (Esteralkohol, Eastman, Kingsport, Tennessee, USA),
- Tego Airex (Entschäumer und Entlüfter, Evonik Industries AG, Essen, Deutschland),
- BYK-380 N (Lösung eines nichtionischen Acryl-Copolymers, BYK-Chemie GmbH, Wesel, Deutschland).

Ein Gemisch aus 80 Gew.-% natürlichem Calciumborat, 10 Gew.-% Bariumborat und 10 Gew.-% Zirkoniumborat mit einem d90-Wert von ca. 75 µm wurde nach Trocknen bei 110°C +/-5°C in eine konventionelle Trommelmühle überführt und dort 8 h lang nach folgendem Versatz gemahlen (Tab. 1):

**Tab. 1**

| **Komponenten** | **Gewichtsteile** |
|---|---|
| Borat | 100 |
| Wasser | 55 |
| Peptapon 52 | 0, 2 |
| Dolapix G65 | 0,45 |

Der so aufbereitete Schlicker wurde anschließend in zwei weiteren Stufen weiter zerkleinert. Hierzu wurde die Suspension zunächst mit den unten aufgeführten Prozesshilfsmitteln in einer Planetenkugelmühle der Firma Retsch bei 550 min⁻¹ eine Stunde lang ausgemahlen (Tab. 2):

**Tab. 2**

| **Komponenten** | **Gewichtsteile** |
|---|---|
| Mahlansatz Trommelmühle | 100 |
| Wasser | 5 |
| Tego Dispers 651 | 1,5 |
| Texanol | 0, 1 |
| Tego Airex 920 W | 0, 1 |

Dieser Aufbereitungsschritt ließ die durchschnittliche Korngröße unter 1 µm sinken. Nach dem Abkühlen der aufbereiteten Glasursuspension erfolgte weiteres Mahlen (Tab. 3).

**Tab. 3**

| **Komponenten** | **Gewichtsteile** |
|---|---|
| Mahlansatz Planetenmühle 1h | 100 |
| Wasser | 4 |
| Byk 380 N | 0, 7 |
| Texanol | 0, 05 |

In diesem abschließenden Mahlschritt wurden im Abstand von 5 min Proben genommen. Nach etwa 45 min ergab sich kaum eine weitere Veränderung in der Korngröße. Der dritte Schritt dauert somit 45 min bei 650 min⁻¹ in der genannten Planetenmühle.

Das erfindungsgemäße Pulver wurde dann einem Sprühtrocknen unterworfen und hatte danach eine Korngröße von ca. 250 nm (d90).

Aus diesem Pulver wurde dann in einem weiteren Verfahrensschritt eine erfindungsgemäße Suspension wie folgt hergestellt.

100 g des Pulvers mit einer mittleren Teilchengröße von 250 nm wurden unter Zugabe von 0,05 Gew.-% Triethylamin in 100 g Wasser suspendiert und 3 Stunden lang bei 45°C gerührt. Anschließend wurden unter langsamen Rühren 15 g Zirkonoxychlorid hinzugeben. Anschließend erfolgte die Zugabe von 12 g Methyltriethoxysilan, welches als späteres Kupplungsmedium dient.

Der pH-Wert sollte dabei im Bereich 5 bis 6,5 liegen. Anschließend wurden zu dieser Mischung 50 g eines Acrylsäureharzes und 20 g einer 30 gew.-%igen Lithiumaluminatlösung, welche über 16 h bei 55°C unter permanentem Rühren hergestellt worden war, gegeben. Der eingestellte pH-Wert lag bei etwa 8,8.

Die Wirksamkeit dieser Suspension als fungizides Holzmittel wurde mit Hilfe eines *in vitro*-Verfahrens ermittelt. Dazu wurde die Suspension in kleinen Mulden tropfenförmig auf einen 2 Gew.-%igen Malzextraktagar in Petrischalen aufgetragen und mit den Holz zerstörenden Pilzen *Aureobasidium pullulans, Sclerophoma pithyopila, Aspergillus niger* und *Trichoderma viride* (grüner Holzschimmel) beimpft. Anschließend wurden die Schalen 3 Tage lang bei 22 bis 24°C bebrütet. Nach dieser Zeit haben sich die Pilze in den Kontrollschalen sehr gut entwickelt.

Die fungizide Wirksamkeit der Suspension wurde anhand der um die Mulden herum entstandenen pilzfreien Zonen (Hemmhöfe) wie folgt beurteilt (Tab. 4):

**Tab. 4**

| | | |
|---|---|---|
| Kein Hemmhof | (-) | (keine fungizide Wirksamkeit) |
| Kleiner Hemmhof | (+) | 2 mm (geringe fungizide Wirksamkeit) |
| Mittlerer Hemmhof | (++) | 2 bis 6 mm (gute fungizide Wirksamkeit) |
| Großer Hemmhof | (+++) | 6 mm (sehr gute fungizide Wirksamkeit) |

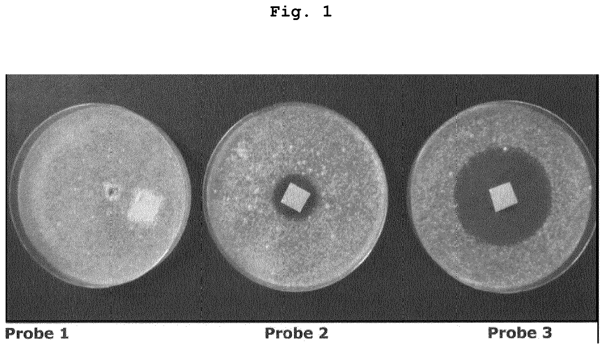

Figur 1 zeigt als Beispiel die fungizide Wirksamkeit auf *Aspergillus niger* für die erfindungsgemäße Suspension (Probe 3), im Vergleich zu handelsüblichen Fungiziden (Probe 1 und Probe 2).

Somit dient die hergestellte Lösung als Imprägnierung/Grundierung für Holz im Bereich des vorbeugenden Holzschutzes. Nach einer Bewitterung eines derart getränkten Kieferholzes in einem Schnellbewitterungsgerätes (QUV von QLab) konnte festgestellt werden, dass der Masseabbau des Holzes nur noch 15 Gew.-% entsprach, im Vergleich mit durch handelsübliche Imprägniergrundierungen behandeltem Holz. Ein irreversibler Schwund des Holzstückes durch die Dauerbelastung mit Wärme lag nur noch bei 5 %, anstatt bei erfahrungsgemäß 12-20 Gew.-%.

Ferner wurde untersucht, welchen Einfluss die Korngröße von Calciumborat auf die Wirksamkeit einer daraus hergestellten Suspension hat. Die Wirksamkeiten verschiedener Suspensionen sind nachfolgend in Tab. 5 angegeben.

**Tab. 5: Einfluss der Korngröße des Borats auf den Befall von Buchenholz durch Schimmelpilz**

| **Behandlung der Oberfläche (OF)** | **Erstes Anzeichen eines Schimmelbefalls bei 30°C Lagerung nach Tagen (d)** |
|---|---|
| Keine Behandlung der OF | 4 |
| 3%ige Suspension von Calciumborat (d90 < 63 µm) | 12 |
| 3%ige Suspension von Calciumborat (d90 < 0,6 µm) | > 150 |
| 3%ige Suspension von Calciumborat (d90 < 0,2 µm) | > 200 |

Aus diesen Ergebnissen ist ersichtlich, dass es - im Gegensatz zu der Lehre der WO 01/87559 A2 - auf die Teilchengröße des Borats ankommt und eine geringe Teilchengröße von erfindungsgemäß (d90) von weniger als 500 nm vorteilhaft ist.

## Patentansprüche

1. Pulverförmig vorliegendes Kationborat mit
a. einer Wasserlöslichkeit von höchstens 5 g/l bei 20°C angegeben als freies Bor, und
b. einer Korngröße d90, bestimmt gemäß ISO 20998-1: 2006, von weniger als 500 nm,
wobei das Pulver Haftvermittler ausgewählt aus der Gruppe der Titanate, Aluminate, Zirkonate, Silane und Mischungen davon enthält, und
wobei das Pulver mindestens 50 Gew.-% Calciumborat umfasst, bezogen auf die Gesamtmasse Kationborat und angegeben als Ca₃(BO₃)₂.

2. Pulver nach Anspruch 1, **dadurch gekennzeichnet, dass** die Korngröße d90 weniger als 450 nm beträgt, vorzugsweise weniger als 400 nm, insbesondere weniger als 350 nm, beispielsweise weniger als 300 nm, wie weniger als 250 nm, vorzugsweise weniger als 200 nm, insbesondere weniger als 200 nm, wie weniger als 150 nm oder weniger als 100 nm, jeweils bestimmt gemäß ISO 20998-1:2006.

3. Pulver nach Anspruch 1 oder 2, **dadurch gekennzeichnet, dass** die Wasserlöslichkeit mindestens 0,1 g/l Wasser beträgt.

4. Pulver nach einem der vorhergehenden Ansprüche, **dadurch gekennzeichnet, dass** es weiteres Kationborat enthält, wobei das Kation ausgewählt ist aus der Gruppe bestehend aus Magnesium, Strontium, Barium, Lithium, Aluminium, Titan, Silicium, Zink, Mangan, Zirkon, Silicium, Ammonium und Mischungen davon.

5. Pulver nach einem der vorhergehenden Ansprüche, **dadurch gekennzeichnet, dass es** mindestens 60 Gew.-% Calciumborat umfasst, bevorzugter mindestens 65 Gew.-% Calciumborat, insbesondere mindestens 70 Gew.-% Calciumborat, wie mindestens 75 Gew.-% Calciumborat, jeweils bezogen auf die Gesamtmasse Kationborat und angegeben als Ca₃(BO₃)₂.

6. Pulver nach einem der vorhergehenden Ansprüche, **dadurch gekennzeichnet, dass** das Calciumborat synthetischen oder natürlichen Ursprungs ist,
wobei das Calciumborat vorzugsweise ausgewählt ist aus Colemanit (CaB₃O₄(OH)₃ · 3 H₂O), Jarandolit (CaB₃O₄(OH)₃) und Hydroboracit (CaMgB₆O₈(OH)₆ · 3 H₂O) und Ulexit (Na_{0,3}Ca_{0,7}B₃O₄(OH)₃ · H₂O).

7. Pulver nach einem der Ansprüche 4 bis 6, **dadurch gekennzeichnet, dass** es 1 bis 20 Gew.-% Bariumborat umfasst, vorzugsweise 2 bis 15 Gew.-% Bariumborat, jeweils bezogen auf die Gesamtmasse Metallborat und angegeben als Ba₃(BO₃)₂.

8. Pulver nach einem der Ansprüche 4 bis 7, **dadurch gekennzeichnet, dass** es 1 bis 20 Gew.-% Zirkoniumborat umfasst, vorzugsweise 2 bis 15 Gew.-% Zirkoniumborat, jeweils bezogen auf die Gesamtmasse Kationborat und angegeben als Zr₃(BO₃)₄.

9. Pulver nach einem der vorhergehenden Ansprüche, **dadurch gekennzeichnet, dass** das Pulver mit dem Haftvermittler beschichtet ist.

10. Pulver nach einem der vorhergehenden Ansprüche, **dadurch gekennzeichnet, dass** das Silan ein Aminosilan ist.

11. Verfahren zur Herstellung des pulverförmig vorliegenden Kationborats gemäß einem der vorhergehenden Ansprüche, bei dem:
a) Kationborat in Anwesenheit des Haftvermittlers vermahlen wird und
b) das Mahlprodukt Trocknen (vorzugsweise Sprüh- oder Gefriertrocknen) unterworfen wird,
um das pulverförmig vorliegende Kationborat zu erhalten.

12. Suspension, die umfasst:
a. Suspensionsmittel und
b. das pulverförmig vorliegende Kationborat gemäß einem der Ansprüche 1 bis 10.

13. Suspension nach Anspruch 12, **dadurch gekennzeichnet, dass**
das Suspensionsmittel ein oder mehrere Lösemittel ausgewählt aus Wasser, Glykolen und Kohlenwasserstoffen umfasst,
wobei das Suspensionsmittel vorzugsweise ein oder mehrere Lösemittel ausgewählt aus Wasser, Naphta und Ethylenglykol umfasst.

14. Verwendung des Pulvers gemäß einem der Ansprüche 1 bis 10,
oder der Suspension gemäß Anspruch 12 oder 13, für die fungizide, biozide und insektizide Ausrüstung von organischen oder anorganischen Bindemitteln, Lackhalberzeugnissen und Beschichtungsstoffen,
vorzugsweise von lignosehaltigen synthetischen oder natürlichen Materialien, Leimen, Klebern, Kunststoffen, Polymerkompositen, Kohlenstoff-basierten Bauteilen, Beton, Betonersatzstoffen, Teer- und Asphaltmischungen, anorganischen oder hybridbasierenden Beschichtungsstoffen, Textilien, Glas, Keramik, Glaskeramik, Metallen oder Metall- oder Salzschmelzen.
insbesondere zur fungiziden Ausrüstung von Holzschutzmitteln.

15. Verwendung des Pulvers gemäß einem der Ansprüche 1 bis 10,
oder der Suspension gemäß Anspruch 12 oder 13, für die licht- und wetterbeständige Ausrüstung von organischen oder anorganischen Bindemitteln, Lackhalberzeugnissen und Beschichtungsstoffen,
vorzugsweise zum UV-Schutz derselben,
insbesondere zur UV-Schutz-Ausrüstung von Holzschutzmitteln.

16. Verwendung nach Anspruch 14 oder Anspruch 15, **dadurch gekennzeichnet, dass** bei der Tränkung von Holz das Holz verfärbende Inhaltsstoffe (wie beispielsweise langkettige Zucker, Tannin oder Abbauprodukte von Lignin) ganz oder teilweise gebunden und ein Durchschlagen in die nachfolgenden Beschichtungen verhindert oder zeitlich verzögert wird.

17. Verwendung nach einem der Ansprüche 14 bis 16, **dadurch gekennzeichnet, dass** die Menge Kationborat 0,01 bis 25 Gew.-% beträgt, bezogen auf das Gewicht des ausgerüsteten Produkts, vorzugsweise 0,1 bis 10 Gew.-%.

18. Verwendung des Pulvers gemäß einem der Ansprüche 1 bis 10 oder der Suspension gemäß Anspruch 12 oder 13 in einem Pflanzenschutzmittel, Dünger, Katalysator zur Veränderung von NOX in der Luft, CO-Absorber, Neutronenabsorber, Schmiermittel in Ölen, Spezialglas oder einem Brandschutzmittel.

19. Holzschutzmittel, welches das Pulver gemäß einem der Ansprüche 1 bis 10 oder die Suspension gemäß Anspruch 12 oder Anspruch 13 umfasst, wobei die vorhandene Menge Kationborat in dem Holzschutzmittel 0,05 bis 25 Gew.-% beträgt, vorzugsweise 0,1 bis 5 Gew.-%, bezogen auf das Gewicht des Holzschutzmittels.

## Claims

1. Cationic borate in powder form with
a. a water solubility of maximum 5 g/l at 20°C, indicated as free boron, and
b. a particle size d90, determined according to ISO 20998-1:2006, of less than 500 nm,
wherein the powder contains adhesion promoters selected from the group of titanates, aluminates, zirconates, silanes and mixtures thereof, and
wherein the powder comprises at least 50% calcium borate by weight, based on the total mass of cationic borate and indicated as Ca₃(BO₃)₂.

2. Powder according to claim 1, **characterized in that** the particle size d90 is less than 450 nm, preferably less than 400 nm, in particular less than 350 nm, for example less than 300 nm, such as less than 250 nm, preferably less than 200 nm, in particular less than 200 nm, such as less than 150 nm or less than 100 nm, in each case determined according to ISO 20998 -1:2006.

3. Powder according to claim 1 or 2, **characterized in that** the water solubility is at least 0.1 g/l water.

4. Powder according to any one of the preceding claims, **characterized in that** it contains further cationic borate, the cation being selected from the group consisting of magnesium, strontium, barium, lithium, aluminum, titanium, silicon, zinc, manganese, zirconium, silicon, ammonium and mixtures thereof.

5. Powder according to any one of the preceding claims, **characterized in that** it contains at least 60% calcium borate by weight, more preferably at least 65% calcium borate by weight, in particular at least 70% calcium borate by weight, such as at least 75% calcium borate by weight, in each case based on the total mass of cationic borate and indicated as Ca₃ (BO₃)₂.

6. Powder according to any one of the preceding claims, **characterized in that** the calcium borate is of synthetic or natural origin, wherein the calcium borate is preferably selected from colemanite (CaB₃O₄(OH)₃ · 3 H₂O), jarandolite (CaB₃O₄(OH)₃) and hydroboracite (CaMgB₆O₈(OH)₆ · 3 H₂O) and ulexite (Na_{0,3}Ca_{0,7}B₃O₄(OH)₃ · H₂O).

7. Powder according to any one of claims 4 to 6, **characterized in that** it contains between 1 and 20 % barium borate by weight, preferably 2 to 15 % barium borate by weight, in each case based on the total mass of metal borate and indicated as Ba₃(BO₃)₂.

8. Powder according to any one of claims 4 to 7, **characterized in that** it contains 1 to 20% zirconium borate by weight, preferably 2 to 15% zirconium borate by weight, in each case based on the total mass of cationic borate and indicated as Zr₃(BO₃)₄.

9. Powder according to any one of the preceding claims, **characterized in that** the powder is coated with the adhesion promoter.

10. Powder according to any one of the preceding claims, **characterized in that** the silane is an aminosilane.

11. Method for the preparation of the cationic borate in powder form according to any one of the preceding claims, wherein
a) cationic borate is ground in the presence of the adhesion promoter and
b) the ground product is bound to drying (preferably spray drying or freeze drying)
to achieve the cationic borate in powder form.

12. Suspension including
a. suspending agent and
b. the cationic borate in powder form according to any one of claims 1 to 10.

13. Suspension according to claim 12, **characterized in that** the suspension agent comprises one or more solvents selected from water, glycols and hydrocarbons, wherein the suspending agent preferably comprises one or more solvents selected from water, naphtha and ethylene glycol.

14. The use of the powder according to any one of claims 1 to 10, or of the suspension according to claims 12 or 13, for the fungicidal, biocidal and insecticidal finishing of organic or inorganic binders, semi-finished varnish products and coating materials, preferably of lignose-containing synthetic or natural materials, glues, adhesives, plastics, polymer composites, carbon-based components, concrete, concrete substitutes, tar and asphalt mixtures, inorganic or hybrid-based coating materials, textiles, glass, ceramics, glass-ceramics, metals or molten metals or salt melts, especially for the fungicidal treatment of wood preservatives.

15. The use of the powder according to any one of claims 1 to 10, or use of the suspension according to claims 12 or 13, for the light- and weather-resistant finishing of organic or inorganic binders, semi-finished varnish products and coating materials, preferably for UV protection thereof, especially for the UV protective equipment of wood preservatives.

16. Use according to claim 14 or claim 15, **characterized in that** during impregnation of wood, substances discoloring the wood (such as long-chain sugars, tannins or degradation products of lignin) are bound in whole or in part and their penetration into the subsequent coatings is prevented or delayed in time.

17. Use according to any one of claims 14 to 16, **characterized in that** the amount of cationic borate is 0.01 to 25% by weight, based on the weight of the finished product, preferably 0.1 to 10% by weight.

18. Use of the powder according to any one of claims 1 to 10 or the suspension according to claim 12 or 13 in a plant protection product, fertilizer, catalyst for modifying NOx in the air, CO absorber, neutron absorber, lubricant in oils, special glass or a fireproofing agent.

19. A wood preservative comprising the powder according to any one of claims 1 to 10 or the suspension according to claim 12 or claim 13, wherein the amount of cationic borate present in the wood preservative is 0.05 to 25% by weight, preferably 0.1 to 5% by weight based on the weight of the wood preservative.

## Revendications

1. Borate cationique sous forme de poudre avec
a. une hydrosolubilité de 5 g/l au maximum à 20 °C, exprimée en bore libre, et
b. une granulométrie d90, déterminée conformément à l'ISO 20998-1 :2006, inférieure à 500 nm,
la poudre contenant des promoteurs d'adhérence choisis du groupe des titanates, aluminates, zirconates, silanes et de leurs mélanges, et dans laquelle la poudre contient au moins 50 % de borate de calcium en poids, sur la base de la masse totale de borate cationique et exprimée en Ca₃(BO₃)₂.

2. Poudre conformément à la revendication 1, **caractérisée en ce que** la granulométrie d90 est inférieure à 450 nm, de préférence inférieure à 400 nm, notamment inférieure à 350 nm, par exemple inférieure à 300 nm, comme inférieure à 250 nm, de préférence inférieure à 200 nm, en particulier inférieure à 200 nm, comme inférieure à 150 nm ou inférieure à 100 nm, respectivement chacune déterminée conformément à l'ISO 20998 -1 :2006.

3. Poudre conformément à la revendication 1 ou 2, **caractérisée en ce que** l'hydrosolubilité est de 0,1 g/l d'eau au minimum.

4. Poudre selon l'une quelconque des revendications précédentes, **caractérisée en ce qu'**elle contient d'autres borates cationiques, le cation étant choisi du groupe constitué par le magnésium, le strontium, le baryum, le lithium, l'aluminium, le titane, le silicium, le zinc, le manganèse, le zirconium, le silicium, l'ammonium et leurs mélanges.

5. Poudre selon l'une quelconque des revendications précédentes, **caractérisée en ce qu'**elle contient au moins 60 % de borate de calcium en poids, de préférence au moins 65 % de borate de calcium en poids, en particulier au moins 70 % de borate de calcium en poids, ainsi qu'au moins 75 % de borate de calcium en poids, dans chaque cas par rapport à la masse totale de borate cationique et exprimée en Ca₃ (BO₃)₂.

6. Poudre selon l'une quelconque des revendications précédentes, **caractérisée en ce que** le borate de calcium est d'origine synthétique ou naturelle, dans lequel le borate de calcium étant de préférence choisi parmi la colémanite (CaB₃O₄(OH)₃ · 3 H₂O), la jarandolite (CaB₃O₄(OH)₃) et l'hydroboracite (CaMgB₆O₈(OH)₆ · 3 H₂O) et l'ulexite (Na_{0,3}Ca_{0,7}B₃O₄(OH)₃ · H₂O).

7. Poudre selon l'une quelconque des revendications 4 à 6, **caractérisée en ce qu'**elle contient 1 à 20 % de borate de baryum en poids, de préférence 2 à 15 % de borate de baryum en poids, dans chaque cas par rapport à la masse totale de borate métallique et exprimée en Ba₃(BO₃)₂.

8. Poudre selon l'une quelconque des revendications 4 à 7, **caractérisée en ce qu'**elle contient de 1 à 20 % de borate de zirconium en poids, de préférence 2 à 15 % de borate de zirconium en poids, dans chaque cas par rapport à la masse totale de borate cationique et exprimée en Zr₃(BO₃)₄.

9. Poudre selon l'une quelconque des revendications précédentes, **caractérisée en ce que** la poudre est revêtue du promoteur d'adhérence.

10. Poudre selon l'une quelconque des revendications précédentes, **caractérisée en ce que** le silane est un aminosilane.

11. Procédé de préparation du borate cationique sous forme de poudre selon l'une quelconque des revendications précédentes, dans lequel :
a) le borate cationique est broyé en présence du promoteur d'adhérence et
b) le produit broyé est soumis à un séchage (de préférence par atomisation ou par lyophilisation),
pour obtenir le borate cationique sous form de poudre.

12. La suspension qui comprend
a. agent de suspension et
b. le borate cationique sous forme de poudre selon l'une quelconque des revendications 1 à 10.

13. Suspension conformément à la revendication 12, **caractérisée en ce que** l'agent de suspension comprend un ou plusieurs solvants choisis parmi l'eau, les glycols et les hydrocarbures, l'agent de suspension comprenant de préférence un ou plusieurs solvants choisis parmi l'eau, le naphta et l'éthylène glycol.

14. L'utilisation de la poudre selon l'une quelconque des revendications 1 à 10, ou de la suspension conformément aux revendications 12 ou 13, pour le traitement fongicide, biocide et insecticide de liants organiques ou inorganiques, de vernis semi-finis de peinture et de matériaux de revêtement, de préférence des matériaux synthétiques ou naturels contenant de la lignose, des colles, des adhésifs, de matières plastiques, des composites polymères, de composants a base de carbone, du béton, des substituts du béton, des mélanges de goudron et d'asphalte, des matériaux de revêtement inorganiques ou à base d'hybrides, des textiles, du verre, de la céramique, de la vitrocéramique, des métaux ou des métaux fondus ou des sels fondus, particulièrement pour le traitement fongicide des agents de préservation du bois.

15. L'utilisation de la poudre selon l'une quelconque des revendications 1 à 10, ou de la suspension conformément aux revendications 12 ou 13, pour l'apprêt résistant à la lumière et aux intempéries de liants organiques ou inorganiques, de vernis semi-finis de peinture et de matériaux de revêtement, de préférence pour la protection contre les rayons ultraviolets de ces derniers, en particulier pour l'équipement de protection contre les rayons ultraviolets des agents de préservation du bois.

16. Utilisation selon la revendication 14 ou à la revendication 15, **caractérisée en ce que**, lors de l'imprégnation du bois, des substances décolorant le bois (tels que les sucres à longue chaîne, les tanins ou les produits de dégradation de la lignine) sont liés entièrement ou partiellement et une infiltration dans les revêtements ultérieurs est empêchée ou retardée dans le temps.

17. Utilisation selon l'une quelconque des revendications 14 à 16, **caractérisée en ce que** la quantité de borate cationique est de 0,01 à 25 % en poids, par rapport au poids du produit fini, de préférence de 0,1 à 10 % en poids.

18. Utilisation de la poudre selon l'une quelconque des revendications 1 à 10 ou de la suspension conformément à la revendication 12 ou 13 dans un produit phytopharmaceutique, un engrais, un catalyseur pour modifier les NOX dans l'air, un absorbeur de CO, un absorbeur de neutrons, un lubrifiant dans des huiles, un verre spécial ou un agent d'ignifugation.

19. Agent de préservation du bois comprenant la poudre selon l'une quelconque des revendications 1 à 10 ou la suspension conformément à la revendication 12 ou la revendication 13, où la quantité de borate cationique présente dans l'agent de préservation du bois est de 0,05 à 25 % en poids, de préférence de 0,1 à 5 % en poids, par rapport au poids de l'agent de préservation du bois.
